# DEMANDE DE BREVET EUROPEEN

(11) **EP 4 310 816 A1**
(43) Date de publication de la demande: **24.01.2024**
(21) Numéro de dépôt: 23185899.4
(22) Date de dépôt: 17.07.2023
(51) Int. Cl.: G08G 5/00, G01C 21/34

(54) **PROCÉDÉ ET SYSTÈME DE GÉNÉRATION DE TRAJECTOIRE LATÉRALE D'UN AÉRONEF**

(30) Priorité: 18.07.2022 FR 2207343
(71) Demandeur: Airbus SAS, 31700 Blagnac (FR)
(72) Inventeur: CONSIGLIERI PEDROSO MENDES DIAS, Miguel, 31700 BLAGNAC (FR); PASTRE, Thomas, 31700 BLAGNAC (FR)
(74) Mandataire: Cabinet Le Guen Maillet

(57) **Abrégé**

Pour amener un aéronef en vol depuis une position initiale à une destination, un système de génération automatique de trajectoire : obtient des polygones représentatifs d'obstacles potentiellement rencontrés par l'aéronef ; et recherche une trajectoire latérale volable en effectuant des contournements de polygones par leurs sommets, en respectant un profil de trajectoire verticale préétabli. La trajectoire latérale étant recherchée en découvrant les polygones à effectivement prendre en compte pour effectuer les contournements, en identifiant au fur et à mesure les polygones qui font obstacle à la progression de la trajectoire latérale volable. Ainsi, la quantité de polygones à prendre en compte dans la recherche de la trajectoire latérale volable est réduite.

## Description

### DOMAINE TECHNIQUE

La présente invention concerne un système de génération automatique en temps-réel d'une trajectoire à suivre pour faire transiter un aéronef selon un profil de trajectoire verticale à respecter, depuis une position géographique courante en vol, vers une destination géoréférencée.

### ETAT DE LA TECHNIQUE ANTERIEURE

Lorsqu'un aéronef est en vol, il peut être souhaitable de fournir une assistance automatique pour déterminer de manière automatique une trajectoire qui permette d'amener l'aéronef jusqu'à une position géoréférencée. De nombreux obstacles sont à prendre en compte dans la détermination d'une trajectoire qui soit volable (« flyable » en anglais) : le relief du terrain, les obstacles météorologiques, les zones militaires dont le survol est interdit, l'état opérationnel de l'aéronef (dépressurisation cabine, moteur hors-service...). Une trajectoire volable est une trajectoire qui en tout point présente une marge de distance minimale (ou prédéterminée) par rapport à tout obstacle identifié (relief...) et que peut suivre l'aéronef compte tenu de son état opérationnel (dépressurisation éventuelle, perte d'un moteur...). Il est notamment souhaitable de fournir une telle assistance automatique dans le cadre de pilotage de drones.

Dans l'état actuel de la technique, déterminer de manière automatique, en temps-réel, une telle trajectoire requiert de grandes ressources de traitement, et surtout un temps de calcul important. Il est alors souhaitable de pallier ces inconvénients de l'état de la technique.

Il est notamment souhaitable de fournir une solution permettant de déterminer une trajectoire sûre (« safe » en anglais) à suivre pour amener un aéronef actuellement en vol, depuis sa position géographique courante, à une destination géoréférencée en respectant un profil de trajectoire verticale préétabli. Il est plus particulièrement souhaitable de fournir une solution qui permette de déterminer cette trajectoire en un temps réduit. Il est aussi souhaitable de fournir une solution qui permette d'indiquer si une telle trajectoire existe.

### EXPOSE DE L'INVENTION

Il est proposé un procédé de génération de trajectoire pour amener un aéronef en vol depuis une position initiale de l'aéronef à une destination ayant une position géoréférencée, le procédé étant implémenté par un système de génération automatique de trajectoire sous forme de circuiterie électronique embarquée dans l'aéronef, le procédé comportant les étapes suivantes : obtenir des polygones représentatifs d'obstacles potentiellement rencontrés par l' aéronef depuis la position initiale de l' aéronef jusqu' à la destination, chaque polygone étant associé avec une couche d'altitude dans laquelle l'obstacle est inclus dans ledit polygone ; rechercher une trajectoire latérale volable entre la position initiale de l'aéronef et la destination en contournant les polygones par les sommets, en respectant un profil de trajectoire verticale préétabli. Le procédé est tel que la trajectoire latérale est recherchée de la façon suivante : évaluer des premières trajectoires, qui sont des trajectoires directes entre une position courante de l'aéronef et la destination en tenant compte d'une direction de vol de l'aéronef à la position courante et d'une direction à suivre à destination, la position courante de l'aéronef étant initialement la position initiale de l'aéronef, et identifier tout polygone rencontré dans les premières trajectoires ; évaluer une deuxième trajectoire, qui est une trajectoire de contournement de sommet, entre ladite position courante de l'aéronef et chaque sommet de polygone identifié ; identifier tout nouveau polygone rencontré dans les deuxièmes trajectoires ; choisir une nouvelle position courante de l'aéronef parmi les sommets de polygones identifiés pour chacun desquels une trajectoire volable directe jusqu'au sommet en question existe, et réitérer jusqu'à trouver une position courante de l'aéronef pour laquelle au moins une dite première trajectoire existe sans rencontrer de polygone. En outre, la trajectoire latérale est recherchée de telle sorte que, lorsqu'un nouveau polygone est identifié, une dite deuxième trajectoire est évaluée pour chaque sommet de chaque nouveau polygone identifié, et ce, vis-à-vis de chaque position courante précédente, avec éventuelle identification de nouveau polygone rencontré.

Ainsi, une trajectoire sûre à suivre pour amener un aéronef actuellement en vol, depuis sa position géographique courante, à une destination géoréférencée en respectant un profil de trajectoire verticale préétabli est trouvée, si elle existe, en un temps réduit.

Dans un mode de réalisation particulier, la trajectoire latérale est recherchée, par itérations sur des positions courantes successives de l'aéronef, de : une première phase investiguant la trajectoire directe entre la position courante de l'aéronef qui a été sélectionnée pour l'itération en question et la destination, et investiguant les contournements de sommets possibles à partir de la position courante de l'aéronef qui a été sélectionnée pour l'itération en question ; une deuxième phase investiguant des contournements de sommets possibles, pour les polygones identifiés pendant l'itération en question, à partir de chaque dite position courante précédente.

Dans un mode de réalisation particulier, lorsqu'un polygone est nouvellement rencontré, chacun de ses sommets pour lequel une trajectoire volable directe jusqu'à ce sommet existe est marqué comme position ouverte, et lors de la première phase, la position courante qui a été sélectionnée pour l'itération en question est marquée comme position fermée, et dans la seconde phase, les positions marquées comme fermées sont les positions courantes précédentes.

Dans un mode de réalisation particulier, la nouvelle position courante est choisie parmi les positions marquées comme ouvertes.

Dans un mode de réalisation particulier, chaque sommet de polygone identifié pour lequel une trajectoire volable directe jusqu'à ce sommet existe est associé à une heuristique, ou à un coût d'inclusion du contournement dudit sommet dans la trajectoire latérale vers la destination, afin de choisir la nouvelle position courante parmi les sommets de polygones identifiés.

Dans un mode de réalisation particulier, le procédé comporte en outre les étapes successives suivantes, avant de rechercher la trajectoire latérale : dilater les polygones d'une marge latérale prédéterminée dans toutes les directions, la marge latérale prédéterminée permettant d'assurer une sûreté de navigation de l'aéronef aux instruments ; fusionner les polygones qui se touchent ou se chevauchent par couche d'altitude ; rétracter les polygones de la marge latérale prédéterminée dans toutes les directions.

Dans un mode de réalisation particulier, le procédé comporte l'étape suivante, avant de rechercher la trajectoire latérale : garder uniquement les polygones des couches qui sont pertinentes au regard d'une altitude constante ou d'un intervalle d'altitude défini par le profil de trajectoire verticale.

Il est aussi proposé un produit programme d'ordinateur comportant des instructions causant l'implémentation du procédé ci-dessus selon l'un quelconque de ses modes de réalisation, lorsque les instructions sont exécutées par un processeur. Il est aussi proposé un support de stockage d'informations (non transitoire) stockant un tel produit programme d'ordinateur.

Il est aussi proposé un système de génération automatique de trajectoire pour amener un aéronef en vol depuis une position initiale de l'aéronef à une destination ayant une position géoréférencée, le système de génération automatique de trajectoire comportant de la circuiterie électronique qui est destinée à être embarquée dans l'aéronef et qui est configurée pour implémenter les étapes suivantes : obtenir des polygones représentatifs d'obstacles potentiellement rencontrés par l'aéronef depuis la position initiale de l'aéronef jusqu'à la destination, chaque polygone étant associé avec une couche d'altitude dans laquelle l'obstacle est inclus dans ledit polygone ; rechercher une trajectoire latérale volable entre la position initiale de l'aéronef et la destination en contournant les polygones par les sommets, en respectant un profil de trajectoire verticale préétabli. La circuiterie électronique étant configurée de sorte que la trajectoire latérale est recherchée de la façon suivante : évaluer des premières trajectoires, qui sont des trajectoires directes entre une position courante de l'aéronef et la destination en tenant compte d'une direction de vol de l'aéronef à la position courante et d'une direction à suivre à destination, la position courante de l'aéronef étant initialement la position initiale de l'aéronef, et identifier tout polygone rencontré dans les premières trajectoires ; évaluer une deuxième trajectoire, qui est une trajectoire de contournement de sommet, entre ladite position courante de l'aéronef et chaque sommet de polygone identifié ; identifier tout nouveau polygone rencontré dans les deuxièmes trajectoires ; choisir une nouvelle position courante de l'aéronef parmi les sommets de polygones identifiés pour chacun desquels une trajectoire volable directe jusqu'au sommet en question existe, et réitérer jusqu'à trouver une position courante de l'aéronef pour laquelle au moins une dite première trajectoire existe sans rencontrer de polygone. De plus, la circuiterie électronique est configurée de telle sorte que la trajectoire latérale est en outre recherchée de telle sorte que, lorsqu'un nouveau polygone est identifié, une dite deuxième trajectoire est évaluée pour chaque sommet de chaque nouveau polygone identifié, et ce, vis-à-vis de chaque position courante précédente, avec éventuelle identification de nouveau polygone rencontré.

Il est aussi proposé un aéronef comportant un tel système de génération automatique de trajectoire.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement, en vue de côté, un aéronef équipé d'un système de génération automatique de trajectoire ;
[Fig. 2] illustre schématiquement le système de génération automatique de trajectoire ;
[Fig. 3] illustre schématiquement un exemple d'architecture matérielle du système de génération automatique de trajectoire ;
[Fig. 4] illustre schématiquement un algorithme de simplification d'ensemble de polygones ;
[Fig. 5A] illustre schématiquement un exemple de polygones d'élévation de terrain à simplifier ;
[Fig. 5B] poursuit l'exemple de la Fig. 5A après une opération de dilatation ;
[Fig. 5C] poursuit l'exemple des Figs. 5A et 5B après une opération de rétractation ;
[Fig. 6A] illustre schématiquement un exemple d'un polygone d'élévation de terrain, dont les arêtes sont simplifiées ;
[Fig. 6B] illustre schématiquement un exemple d'une forme de polygone d'élévation de terrain, dont les arêtes ne sont pas simplifiées ;
[Fig. 7] illustre schématiquement, en vue de côté, une marge verticale à respecter pour pouvoir considérer une trajectoire comme volable ;
[Fig. 8] illustre schématiquement, en vue de dessus, une marge latérale à respecter pour pouvoir considérer une trajectoire comme volable ;
[Fig. 9] illustre schématiquement un algorithme de préparation à une recherche de trajectoire latérale ;
[Fig. 10A] illustre schématiquement un premier exemple de profil de trajectoire verticale ;
[Fig. 10B] illustre schématiquement un deuxième exemple de profil de trajectoire verticale ;
[Fig. 10C] illustre schématiquement un troisième exemple de profil de trajectoire verticale ;
[Fig. 10D] illustre schématiquement un quatrième exemple de profil de trajectoire verticale ;
[Fig. 10E] illustre schématiquement un cinquième exemple de profil de trajectoire verticale ;
[Fig. 11A] illustre schématiquement un premier motif de trajectoire entre une position courante de l'aéronef et une destination à atteindre ;
[Fig. 11B] illustre schématiquement un deuxième motif possible de trajectoire entre une position courante de l'aéronef et une destination à atteindre ;
[Fig. 11C] illustre schématiquement un troisième motif possible de trajectoire entre une position courante de l'aéronef et une destination à atteindre ;
[Fig. 11D] illustre schématiquement un quatrième motif possible de trajectoire entre une position courante de l'aéronef et une destination à atteindre ;
[Fig. 12] illustre schématiquement un algorithme de recherche de trajectoire latérale ;
[Fig. 13A] illustre schématiquement une première partie d'algorithme de recherche de trajectoire latérale, dans un mode de réalisation particulier ; et
[Fig. 13B] illustre schématiquement une seconde partie d'algorithme de recherche de trajectoire latérale, dans le mode de réalisation particulier illustré à la Fig. 13A.

### EXPOSE DETAILLE DE MODES DE REALISATION

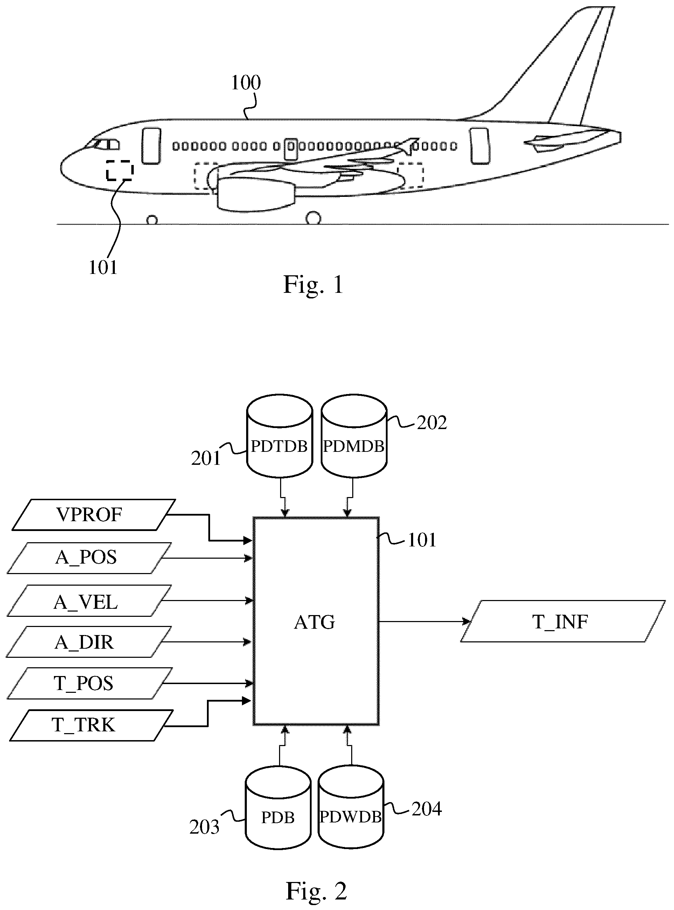

La Fig. 1 illustre schématiquement, en vue de côté, un aéronef 100 équipé d'un système de génération automatique de trajectoire ATG (« Automatic Trajectory Generator » en anglais) 101.

Le système ATG 101 est un équipement électronique embarqué. Par exemple, le système ATG 101 fait partie d'une circuiterie électronique de l'avionique de l'aéronef 100. Préférentiellement, le système ATG 101 est intégré à un calculateur de l'aéronef 100, par exemple le système de gestion de vol FMS (« Flight Management System » en anglais) de l'aéronef 100 ou un autre système de calcul de trajectoire distinct du système de gestion de vol FMS.

Le système ATG 101 est un système d'assistance au pilotage pour déterminer en temps-réel une trajectoire sûre (« safe » en anglais), volable, à suivre pour amener l'aéronef 100 lorsque celui-ci est en vol, depuis sa position géographique courante, jusqu'à une destination géoréférencée, comme par exemple un aéroport ou la position courante d'un porte-avions.

Le système ATG 101 est schématiquement illustré sur la **Fig. 2****.** Le système ATG 101 est configuré pour prendre en entrée un ensemble d'informations fournies par l'avionique : la position géographique initiale de l'aéronef 100 (notée A_POS, typiquement la position actuelle de l'aéronef 100) et une information de position géographique de la destination (notée T_POS). L'ensemble d'informations en question comprend préférentiellement en outre : la vélocité ou vitesse courante de l'aéronef 100 (notée A VEL), la direction de vol actuelle de l'aéronef 100 (notée A_DIR) telle que définie par l'attitude (« attitude » en anglais) de l'aéronef 100, et une information de direction à suivre à destination (notée T_TRK). Le système ATG 101 est configuré pour prendre en outre en entrée un profil de trajectoire verticale à respecter jusqu'à destination (noté VPROF). Le système ATG 101 est configuré pour fournir en sortie une information de trajectoire (notée T_INF).

Il est rappelé ici qu'une trajectoire volable est une trajectoire qui en tout point présente une marge de distance minimale (ou prédéterminée) par rapport à tout obstacle identifié (relief...) et que peut suivre l'aéronef 100 compte tenu de son état opérationnel (dépressurisation éventuelle, perte d'un moteur...).

Pour déterminer l'information de trajectoire T_INF, le système ATG 101 dispose en outre d'informations d'obstacles, par exemple fournies par un ensemble de bases de données. Plus particulièrement : une base de données PDTDB (pour « Polygon Digital Terrain DataBase » en anglais) 201, qui fournit des informations d'élévation de terrain sous forme de polygones par tranches d'altitude ; une base de données PDMDB (pour « Polygon Digital Military DataBase » en anglais) 202, qui fournit des informations de géoréférencement, préférentiellement par tranches d'altitude, sous forme de polygones de zones militaires dont le survol est interdit ; une base de données PDWDB (pour « Polygon Digital Weather DataBase » en anglais) 204, qui fournit des informations géoréférencées sous forme de polygones, préférentiellement par tranches d'altitude, de zones à éviter à cause des conditions météorologiques (nuages d'orage...) ; et une base de données PDB (pour « Performance DataBase » en anglais) 203, qui fournit des informations de performances de l'aéronef 100 selon son état opérationnel.

Les bases de données susmentionnées peuvent être totalement intégrées à un système informatique de l'aéronef 100. Avant le décollage, les bases de données sont mises à jour, par exemple grâce à une sacoche de vol électronique EFB (« Electronic Flight Bag » en anglais). Les bases de données peuvent être intégrées à un système informatique au sol, par exemple un centre informatique d'une compagnie aérienne pour lequel opère l'aéronef 100. La mise à jour des bases de données est alors réalisée grâce à des communications sol - air AGC (« Air - Ground Communications » en anglais). Ces deux approches peuvent être combinées, avec un pré-chargement des bases de données avant le décollage et des mises à jour en vol, par exemple pour prendre en compte des évolutions de données en temps-réel (conditions météo...).

La base de données PDTDB 201 contient des descripteurs de polygones représentant des couches de terrain. Chaque polygone est ainsi associé à une couche d'altitude (entre une borne inférieure de couche et une borne supérieure de couche). L'ensemble des polygones est une quantification (approximation) du terrain et englobe entièrement le terrain réel, ce qui signifie que si une trajectoire évite ces obstacles polygonaux, l'application de cette trajectoire dans le monde réel évite également le relief du terrain.

Les polygones représentant une couche de terrain doivent le faire fidèlement, ce qui signifie qu'ils ne peuvent pas agrandir le terrain au point que des zones volables soient considérées comme des obstacles et que des trajectoires sûres soient alors considérées comme dangereuses et rejetées par le système ATG 101. De plus, vus de dessus, les polygones représentant le terrain d'une couche doivent être entièrement entourés par les polygones représentant le terrain dans les couches inférieures. Cette exigence est nécessaire pour supposer que plus un aéronef est haut, moins le relief du terrain est contraignant, ce qui permet d'effectuer des simplifications de calcul qui accélèrent la recherche de trajectoires.

De la même manière, les zones militaires de la base de données PDMDB 202 et les obstacles météorologiques de la base de données PDWDB 204 sont représentés sous forme de polygones qui résultent d'une quantification (approximation) de ces zones militaires et de ces obstacles météorologiques. Par exemple, un polygone représentant un obstacle de type nuages d'orage est associé à une ou plusieurs couches d'altitude, permettant ainsi d'explorer des trajectoires passant au-dessus ou en dessous dudit obstacle météorologique.

Dans le cas des zones militaires, une variable est préférentiellement associée avec les descripteurs des polygones correspondants et indique si la zone militaire est ouverte (survol autorisé) ou fermée (survol interdit). Cette variable peut être transmise par voie radio à l'aéronef 100 en vol pour notifier un changement de statut (ouverte / fermée) de telle ou telle zone militaire en temps-réel.

Chaque polygone est défini par ses arêtes (« edges » en anglais) et est associé à une altitude plancher et une altitude plafond (couche). Par conséquent, les bases de données stockent des descripteurs de polygone, comportant des descripteurs d'arête incluant par exemple les informations suivantes :
- Longitude et latitude d'un sommet de l'arête
- Longitude et latitude de l'autre sommet de l'arête
- Altitude plancher de la couche
- Altitude plafond de la couche
- Identifiant de polygone auquel appartient l'arête
- Identifiant d'arête au sein du polygone

Chaque descripteur de polygone peut ainsi être constitué de descripteurs d'arêtes consécutifs, préférentiellement présentés, de manière ordonnée, selon le sens horaire ou dans le sens antihoraire de parcours de la périphérie du polygone en question.

Dans le cas d'obstacles météorologiques, les descripteurs de polygones correspondants contiennent par exemple les informations suivantes :
- Horodatage
- Vitesse globale de l'obstacle, avec direction de déplacement
- Facteur de croissance

De plus, pour plus de précision, chaque descripteur d'arête du polygone d'obstacle météorologique peut contenir une information de vélocité, ou vitesse, de chaque sommet de l'arête. Ainsi, grâce à ces informations, le système ATG 101 est apte à extrapoler, à partir de l'instant donné par l'horodatage et grâce à un modèle météorologique, des changements dynamiques de forme des polygones en question.

Des informations supplémentaires peuvent potentiellement être stockées si elles sont utilisées fréquemment et si cela permet de gagner du temps de calcul. Par exemple, chaque descripteur d'arête peut indiquer si le polygone est convexe ou concave au premier sommet, ou si l'arête appartient ou non à une enveloppe convexe du polygone.

Ainsi, lorsque le système ATG 101 effectue en temps-réel un calcul d'une trajectoire à suivre pour faire transiter l'aéronef 100 depuis une position géographique actuelle en vol, vers une destination géoréférencée, le système ATG 101 manipule des polygones comme divulgué ci-après.

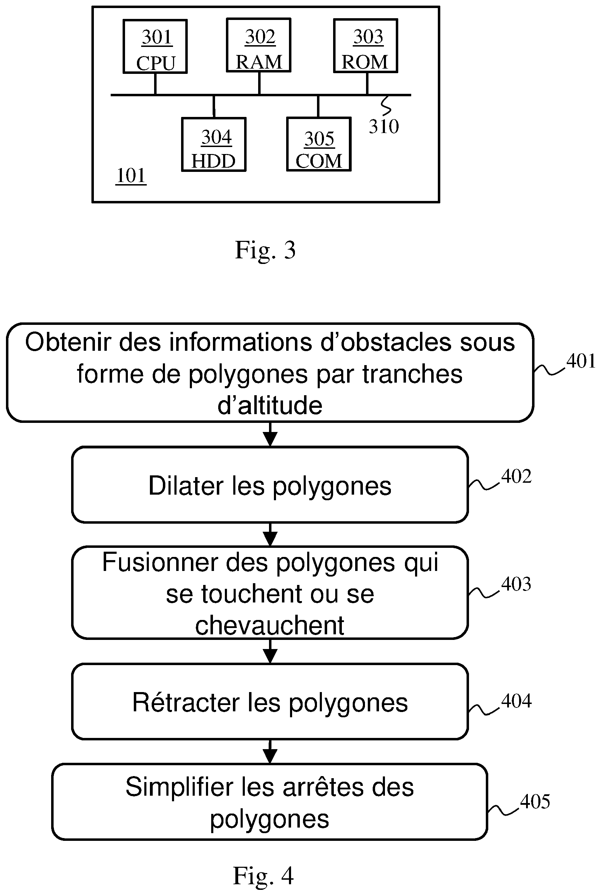

La **Fig. 3** illustre schématiquement un exemple d'architecture matérielle du système ATG 101, qui comprend alors, reliés par un bus de communication 310 : un processeur ou CPU (« Central Processing Unit » en anglais) 301 ; une mémoire vive RAM (« Random Access Memory » en anglais) 302 ; une mémoire morte ROM (« Read Only Memory » en anglais) 303, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 304 ; au moins une interface de communication 305 permettant au système ATG 101 d'interagir dans l'avionique de l'aéronef 100.

Le processeur 301 est capable d'exécuter des instructions chargées dans la RAM 302 à partir de la ROM 303, d'une mémoire externe (non représentée), d'un support de stockage, tel qu'une carte SD, ou d'un réseau de communication (non représenté). Lorsque le système ATG 101 est mis sous tension, le processeur 301 est capable de lire de la RAM 302 des instructions et de les exécuter. Ces instructions forment un programme d'ordinateur causant la mise en oeuvre, par le processeur 301, des comportements, étapes et algorithmes décrits ici.

Tout ou partie des comportements, étapes et algorithmes décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le système ATG 101 comprend de la circuiterie électronique agencée et configurée pour implémenter les comportements, étapes et algorithmes décrits ici.

Pour effectuer le calcul de trajectoire, le système ATG 101 manipule les polygones de manière à limiter la quantité de trajectoires candidates étudiées. Ainsi, la **Fig. 4** illustre schématiquement un algorithme de simplification d'ensemble de polygones implémenté, dans un mode de réalisation particulier, par le système ATG 101 pour potentiellement fusionner certains polygones. Le système ATG 101 effectue une opération de dilatation - rétractation, qui permet de fusionner les polygones qui sont trop proches les uns des autres pour permettre en réalité de faire naviguer l'aéronef 100 entre les obstacles qu'ils représentent, tout en respectant un couloir de protection. Ces opérations de dilatation, fusion et rétractation des polygones sont préférentiellement réalisées en amont d'une recherche de trajectoire volable pour l'aéronef 100, et non pas en temps réel, afin de limiter les temps de calculs.

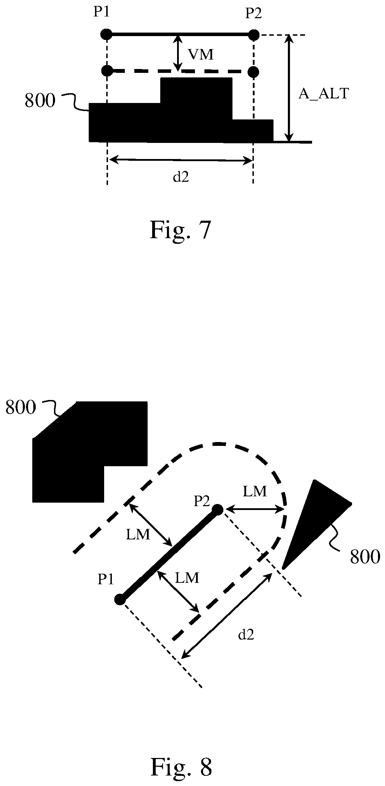

En effet, une marge latérale LM doit être respectée latéralement dans le calcul de trajectoire par rapport aux obstacles à éviter, comme illustré sur la **Fig. 8** où, sur une distance d2 depuis un point P1 jusqu'à un point P2, la marge latérale LM est libre de tout obstacle 800. La marge latérale LM peut être prédéterminée ou variable en fonction de l'altitude, du mode de vol de l'aéronef 100 ou de la zone géographique, par exemple. Par ailleurs, une marge verticale VM doit aussi être respectée verticalement dans le calcul de trajectoire par rapport aux obstacles à éviter, comme illustré sur la **Fig. 7** où, sur la distance d2 depuis le point P1 jusqu'au point P2, la marge verticale VM est libre de tout obstacle 800. La marge verticale VM et la marge latérale LM permettent d'assurer une sûreté de navigation aux instruments, c'est-à-dire d'assurer une trajectoire sûre, volable.

Dans une étape 401, comme déjà décrit, le système ATG 101 obtenir des informations d'obstacles sous forme de polygones par tranches d'altitude.

Dans une étape 402, le système ATG 101 dilate les polygones. En d'autres termes, le système ATG 101 agrandit les polygones dans toutes les directions (dans la couche considérée). Dans chaque direction, la marge latérale LM est ajoutée.

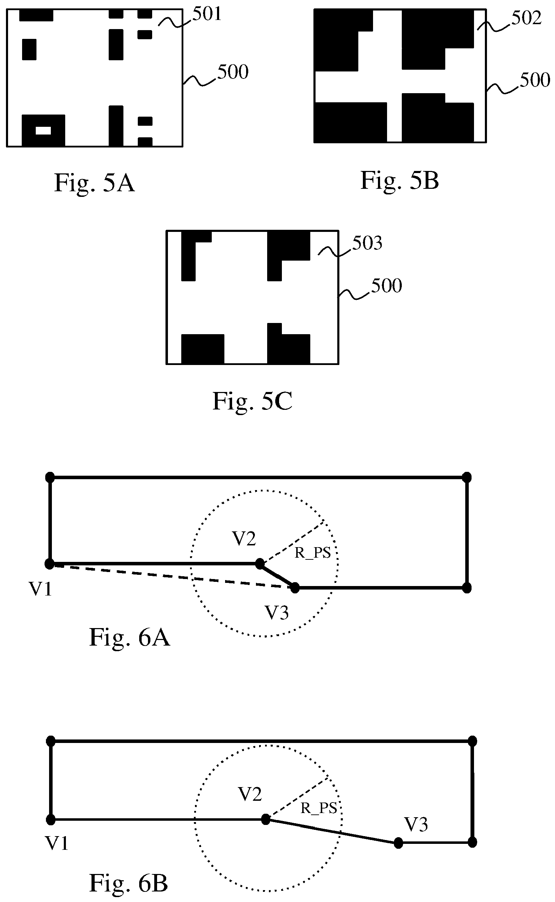

Puis, dans une étape 403, pour chaque couche, le système ATG 101 fusionne les polygones qui se touchent ou se chevauchent (par couche d'altitude). A titre d'exemple, la **Fig. 5B** montre schématiquement un ensemble de polygones 502 dans une zone prédéterminée 500, qui résulte de la dilation et de la fusion d'un ensemble de polygones 501 schématiquement illustré sur la **Fig. 5A****.**

Et dans une étape 404, le système ATG 101 rétracte les polygones, après les éventuelles fusions, de la même proportion que dans l'étape 402. A titre d'exemple, la **Fig. 5C** montre schématiquement un ensemble de polygones 503, qui résulte de la rétractation de l'ensemble de polygones 502 schématiquement illustré sur la Fig. 5B.

Ainsi, la quantité de polygones à manipuler est réduite, sans pour autant renoncer à des trajectoires qui seraient volables. Les étapes 402, 403 et 404 permettent ainsi de simplifier la représentation du terrain, en ne gardant que les obstacles entre lesquels l'aéronef 100 peut naviguer. Le système ATG 101 évite d'étudier des trajectoires de contournement d'obstacle qui ne permettraient pas de respecter le couloir de protection.

Dans une étape 405, le système ATG 101 cherche à simplifier les arêtes des polygones. Selon une configuration, le système ATG 101 identifie tous les sommets de polygones qui se trouvent dans une partie concave du polygone. Le système ATG 101 détermine, pour chacun d'eux, si au moins un de ses deux sommets voisins se trouve à une distance inférieure à un seuil de simplification (cercle de rayon R_PS sur les Figs. 6A et 6B). Si tel est le cas, le système ATG 101 supprime la concavité et relie directement lesdits deux sommets voisins ; sinon, le système ATG 101 conserve la forme du polygone. La **Fig. 6A** illustre schématiquement un polygone où un sommet V2 est dans une concavité entre un sommet V1 et un sommet V3. Le sommet V3 est à une distance du sommet V2 inférieure au seuil de simplification R_PS. Dans ce cas, le système ATG 101 supprime les arêtes qui relient le sommet V1 au sommet V2 et le sommet V2 au sommet V3, et crée en remplacement une arête qui relie directement le sommet V1 au sommet V2. Le sommet V2 disparaît alors. La **Fig. 6B** illustre schématiquement un polygone où le sommet V3 est à une distance du sommet V2 supérieure au seuil de simplification R_PS. Ici, le sommet V2 est conservé. Bien entendu, l'invention n'est pas limitée à cette configuration de simplification des arêtes des polygones. La configuration présentée ici est un exemple concret pour le cas de sommets de polygones qui se trouvent dans une partie concave du polygone et selon un critère de distance aux voisins.

Ainsi, les polygones à manipuler sont de formes plus simples, et ont moins de sommets, ce qui réduit la quantité de trajectoires candidates à étudier. Cette simplification des arêtes de polygone est optionnelle et peut être effectuée indépendamment des opérations de dilatation - fusion - rétractation.

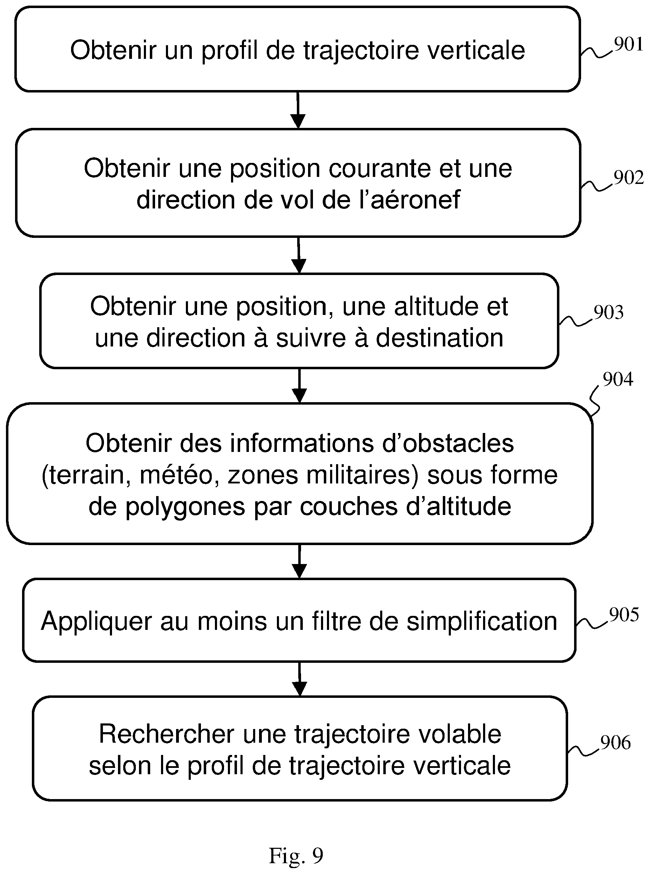

La **Fig. 9** illustre schématiquement un algorithme de préparation à une recherche de trajectoire latérale.

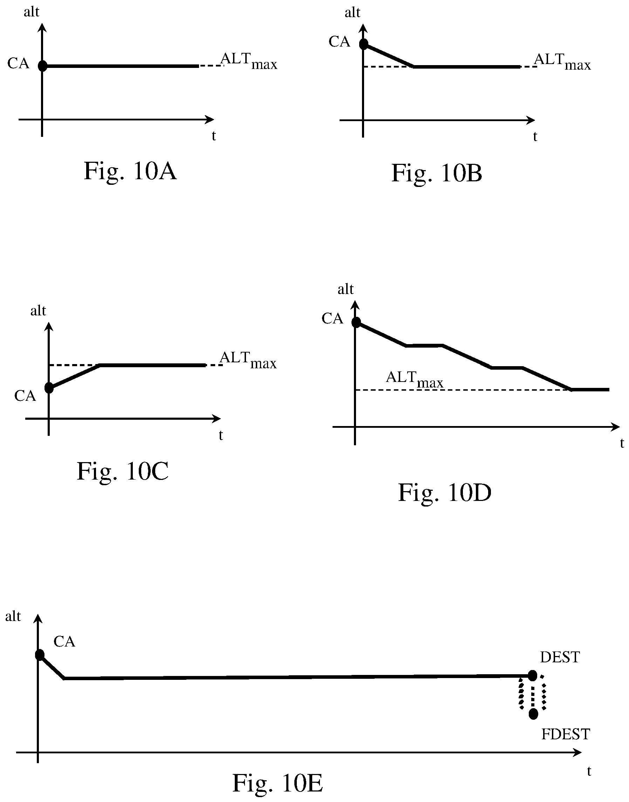

Dans une étape 901, le système ATG 101 obtient un profil de trajectoire verticale. Le profil de trajectoire verticale à respecter est préétabli. Le profil de trajectoire verticale définit les variations d'altitude attendues par l'aéronef 100. Par exemple, si une dépressurisation cabine est en cours, le système ATG 101 doit prendre en compte une descente par paliers afin d'amener l'aéronef 100 à une altitude maximale ALTₘₐₓ définie au regard de l'état opérationnel de l'aéronef 100. La **Fig. 10A** illustre schématiquement un premier exemple de profil de trajectoire verticale. Dans cet exemple, aucun changement d'altitude n'est opéré et l'altitude courante CA (« Current Altitude » en anglais) de l'aéronef 100 est maintenue par exemple à la valeur d'altitude maximale ALTₘₐₓ. Si l'altitude courante CA de l'aéronef 100 est supérieure à l'altitude maximale ALTₘₐₓ définie au regard de l'état opérationnel de l'aéronef 100, le profil de trajectoire verticale descend pour amener l'aéronef 100 à voler à l'altitude maximale ALTₘₐₓ autorisée, comme illustré schématiquement sur la **Fig. 10B****.** Si l'altitude actuelle CA de l'aéronef 100 est inférieure à l'altitude maximale ALTₘₐₓ autorisée, le profil de trajectoire verticale peut monter pour amener l'aéronef 100 à voler à l'altitude maximale ALTₘₐₓ et faire face à un environnement (relief de terrain particulièrement) moins contraignant, comme illustré schématiquement sur la **Fig. 10C****.** Dans le cas où l'altitude maximale ALTₘₐₓ est inférieure à l'altitude actuelle CA de l'aéronef 100 en raison d'une dépressurisation cabine, le profil de trajectoire verticale intègre des procédures de dépressurisation de cabine et respecte une descente par paliers, comme illustré schématiquement sur la **Fig. 10D****.** Comme illustré sur la **Fig. 10E****,** le profil de trajectoire verticale peut prendre en compte une quantité d'itérations d'un schéma de circuit d'attente (voir en pointillés sur la Fig. 10E) entre la destination (notée DEST) pour laquelle une trajectoire latérale est à trouver et la destination finale (notée FDEST) qui se trouve au-dessous. Dans une autre réalisation, le profil de trajectoire verticale peut intégrer une trajectoire de descente.

Dans une étape 902, le système ATG 101 obtient la position actuelle A_POS de l'aéronef 100, la direction de vol A_DIR de l'aéronef 100, ainsi que la vitesse courante (ou actuelle) A_VEL de l'aéronef 100. La vitesse courante A_VEL de l'aéronef 100 permet de déterminer le rayon d'un tout premier virage que l'aéronef peut être amener à effectuer pour suivre la trajectoire établie par le système ATG 101.

Dans une étape 903, le système ATG 101 obtient la position T_POS de la destination DEST, ainsi que son altitude et la direction à suivre T_TRK à destination.

Dans une étape 904, le système ATG 101 obtient des informations d'obstacles (terrain, météo, zones militaires) sous forme de polygones par couches d'altitude. Ces informations sous forme de polygones sont obtenues auprès des bases de données PDTDB 201, PDMDB 202 et PDWDB 204 précédemment évoquées. Par exemple, le système ATG 101 obtient des informations d'obstacles présents dans une zone géographique de surface prédéterminée qui inclut la position actuelle de l'aéronef 100 et la position de la destination. Cette zone géographique est de préférence la plus petite possible, de sorte à obtenir les informations d'obstacles présents dans une zone géographique minimale incluant la position actuelle de l'aéronef 100 et la position de la destination et permettant de trouver un chemin depuis la position actuelle de l'aéronef 100 jusqu'à la position de la destination.

Dans une étape 905 optionnelle, le système ATG 101 applique au moins un filtre de simplification des polygones à éviter dans le calcul de trajectoire. Par exemple, un tel filtre est réalisé grâce aux opérations de dilatation-fusion-rétractation de polygones et/ou de simplification des arêtes de polygone déjà décrites en relation avec la Figs. 4, 5A, 5B, 5C, 6A et 6B. Des filtres de simplification peuvent notamment être appliqués au fur et à mesure d'une recherche de trajectoire volable. De préférence, ces filtrages, qui peuvent nécessiter des temps de calculs importants, sont réalisés au sol, au préalable à un vol, lors de la construction de la base de données PDTDB 201.

Dans un mode particulier de réalisation de filtrage, le système ATG 101 effectue une recherche de trajectoire latérale par contournement de sommets uniquement en considérant les sommets de polygones pertinents au regard du profil de trajectoire verticale. Ainsi, dans le cas où la recherche de trajectoire doit être effectuée à altitude constante, seule la plus basse couche parmi celles qui ne sont pas inférieure à l'altitude de l'aéronef 100 moins la marge verticale VM est prise en compte. En cas de montée ou de descente, le même raisonnement est appliqué pour ne garder que les couches qui sont pertinentes au regard de l'intervalle d'altitude considéré dans le profil de trajectoire verticale.

Dans une étape 906, le système ATG 101 recherche une trajectoire volable depuis la position actuelle A_POS de l'aéronef jusqu'à la position de la destination T_POS, en suivant le profil de trajectoire verticale obtenu à l'étape 901, et en évitant donc les obstacles représentés par les polygones obtenus à l'étape 904. La recherche de trajectoire tient préférentiellement compte de la direction actuelle A_DIR de vol de l'aéronef 100, ainsi que de la direction à suivre T_TRK à destination, et des performances de l'aéronef 100 au regard de son état opérationnel.

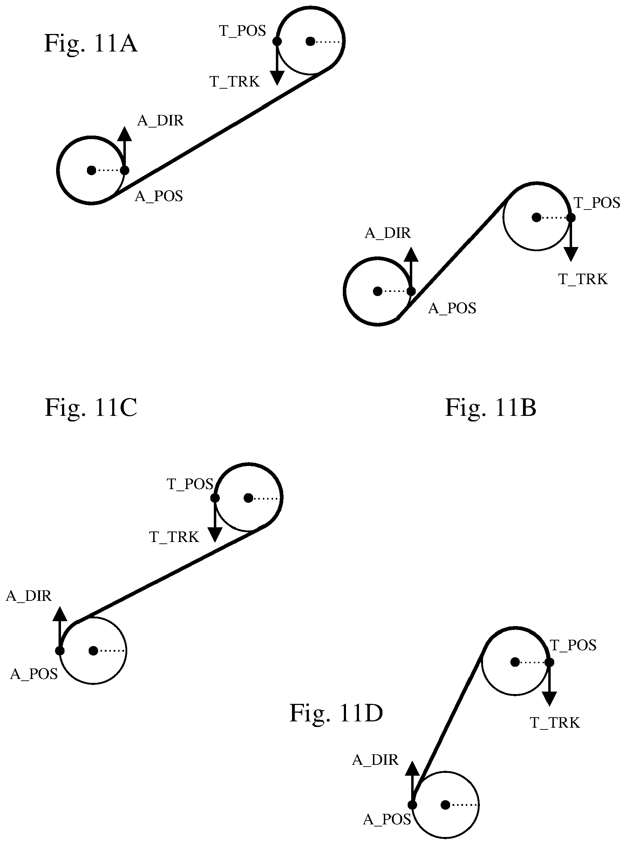

Ainsi, préférentiellement, le système ATG 101 calcule la trajectoire latérale, au départ de la position A_POS, en s'appuyant sur deux premiers cercles représentatifs du tout premier virage que l'aéronef 100 peut effectuer à partir de la position A_POS pour respecter la direction actuelle A_DIR : un premier cercle centré à gauche par rapport à la position A_POS et un autre premier cercle centré à droite par rapport à la position A_POS. De la même manière, le système ATG 101 calcule la trajectoire latérale, à l'arrivée à la position T_POS, en s'appuyant sur deux seconds cercles représentatifs du tout dernier virage que l'aéronef 100 peut effectuer à l'arrivée à la position T_POS pour respecter la direction T_TRK : un second cercle centré à gauche par rapport à la position T_POS et un autre second cercle centré à droite par rapport à la position T_POS. En considérant qu'il n'y a pas d'obstacle entre la position actuelle A_POS de l'aéronef 100 et la position T_POS de la destination, les trajectoires possibles sont schématiquement illustrées sur les Figs. 11A à 11D.

Sur la **Fig. 11A****,** la trajectoire est telle que l'aéronef 100 effectue un virage à gauche depuis la position A_POS, suit le premier cercle centré à gauche par rapport à la position A_POS, suit ensuite une tangente vers le deuxième cercle centré à gauche par rapport à la position T_POS et effectue un virage à gauche en suivant ledit deuxième cercle jusqu'à la position T_POS de la destination. Sur la **Fig. 11B****,** la trajectoire est telle que l'aéronef 100 effectue un virage à gauche depuis la position A_POS, suit le premier cercle centré à gauche par rapport à la position A_POS, suit ensuite une tangente vers le deuxième cercle centré à droite par rapport à la position T_POS et effectue un virage à droite en suivant ledit deuxième cercle jusqu'à la position T_POS de la destination. Sur la **Fig. 11C****,** la trajectoire est telle que l'aéronef 100 effectue un virage à droite depuis la position A_POS, suit le premier cercle centré à droite par rapport à la position A_POS, suit ensuite une tangente vers le deuxième cercle centré à gauche par rapport à la position T_POS et effectue un virage à gauche en suivant ledit deuxième cercle jusqu'à la position T_POS de la destination. Sur la **Fig. 11D****,** la trajectoire est telle que l'aéronef 100 effectue un virage à droite depuis la position A_POS, suit le premier cercle centré à droite par rapport à la position A_POS, suit ensuite une tangente vers le deuxième cercle centré à droite par rapport à la position T_POS et effectue un virage à droite en suivant ledit deuxième cercle jusqu'à la position T_POS de la destination.

A noter qu'il est toujours possible de permettre à l'aéronef 100 d'effectuer un virage à gauche autant qu'un virage à droite au début de la recherche de trajectoire. Si l'aéronef 100 est en cours de virage à droite, et qu'il est souhaité que l'aéronef 100 fasse ensuite un virage à gauche, une marge est introduite pour permettre une recherche de trajectoire avec un virage à gauche.

Par exemple, le système ATG 101 peut effectuer, dans un premier temps, un calcul de trajectoire latérale depuis la position A_POS jusqu'à la position T_POS, en tenant alors compte de la direction actuelle A_DIR de vol de l'aéronef 100, ainsi que de la direction à suivre T_TRK à destination, et des performances de l'aéronef 100 au regard de son état opérationnel.

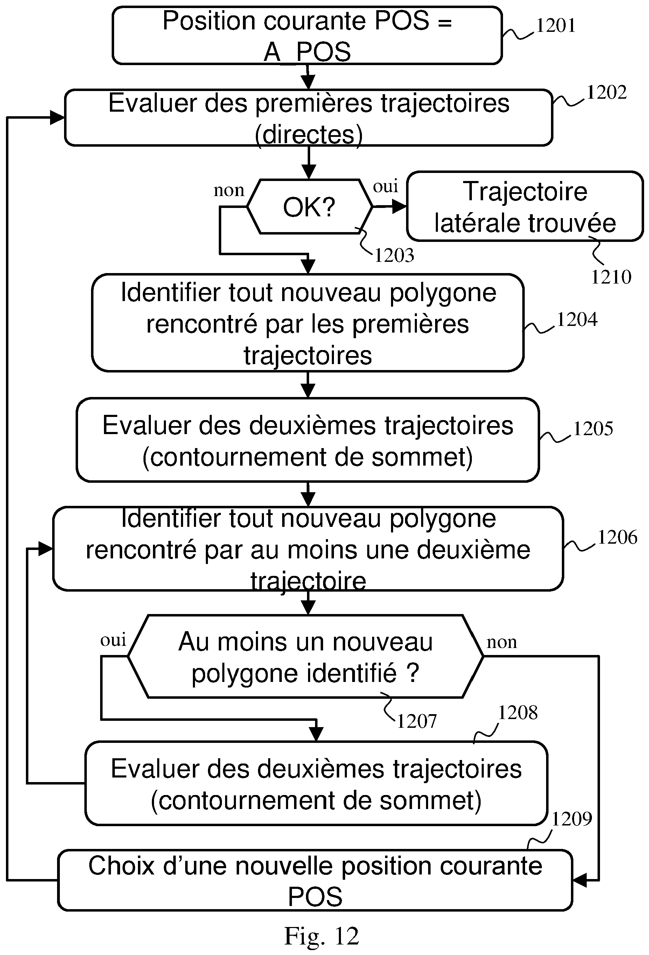

La **Fig. 12** illustre schématiquement un algorithme de recherche de trajectoire latérale. L'algorithme cherche successivement des portions de trajectoire par contournement des sommets des polygones représentant les obstacles à éviter. Le système ATG 101 effectue ainsi des évaluations de trajectoires, en faisant progresser une position courante POS de sommet de polygone à sommet de polygone, jusqu'à trouver une trajectoire directe sans obstacle avec la destination.

Dans une étape 1201, le système ATG 101 établit la position courante POS à la position A_POS.

Dans une étape 1202, le système ATG 101 évalue des premières trajectoires (telles que décrites ci-dessus en relation avec les Figs. 11A à 11D), directes, entre la position courante POS et la position T_POS à la destination. Le système ATG 101 détermine ainsi s'il existe au moins une trajectoire volable directe entre la position courante POS et la position T_POS à la destination, en tenant compte de la direction de vol de l'aéronef 100 à la position courante, ainsi que de la direction à suivre T_TRK à destination, ou si au moins un obstacle existe entre ces deux positions.

Dans l'évaluation des premières trajectoires, le système ATG 101 tient compte de la marge LM susmentionnée pour déterminer si les premières trajectoires sont volables ou pas.

Dans une étape 1203, le système ATG 101 vérifie si au moins l'une des premières trajectoires est volable. Si tel est le cas, une étape 1210 est effectuée ; sinon, une étape 1204 est effectuée.

Dans l'étape 1204, le système ATG 101 identifie tout nouveau polygone rencontré par les premières trajectoires évaluées à l'étape 1202. En d'autres termes, le système ATG 101 garde trace de chaque polygone rencontré au fur et à mesure de ses calculs de trajectoire latérale potentielle. Si un polygone est sur le chemin de l'une des premières trajectoires évaluées à l'étape 1202 et que ce polygone n'avait pas été rencontré précédemment, ledit polygone est identifié à l'étape 1204, et ce polygone va être ensuite considéré pour être contourné.

Dans une étape 1205, le système ATG 101 évalue des deuxièmes trajectoires entre la position courante POS et chaque sommet de polygone identifié à l'étape 1204 ou lors de toute itération précédente. Les deuxièmes trajectoires sont des trajectoires qui visent à contourner l'obstacle représenté par le polygone en contournant le sommet en question. Le système ATG 101 détermine ainsi s'il existe une trajectoire volable entre la position courante POS et chaque sommet de polygone identifié à l'étape 1204 ou lors de toute itération précédente, ou si au moins un obstacle existe entre ces deux positions. Seuls les sommets qui offrent une trajectoire volable depuis la position courante POS sont retenus comme piste potentielle de poursuite de trajectoire latérale à partir de ladite position courante POS.

Dans l'évaluation des deuxièmes trajectoires, le système ATG 101 tient compte de la marge LM susmentionnée pour déterminer si la deuxième trajectoire considérée est volable ou pas.

Dans une étape 1206, le système ATG 101 identifie tout nouveau polygone rencontré par les deuxièmes trajectoires évaluées à l'étape 1205 (comme dans l'étape 1204 vis-à-vis des premières trajectoires).

Dans une étape 1207, le système ATG 101 vérifie si au moins un nouveau polygone a été identifié dans l'étape 1204 ou dans l'étape 1206. Si tel est le cas, une étape 1208 est effectuée ; sinon, une étape 1209 est effectuée.

Dans l'étape 1208, le système ATG 101 évalue des dites deuxièmes trajectoires entre chaque position courante précédente et chaque sommet de nouveau polygone identifié dans l'étape 1204 ou dans l'étape 1206. Ainsi, le système ATG 101 prend en compte les nouveaux polygones, pour évaluer leur contournement potentiel, de manière rétroactive par rapport aux positions déjà étudiées précédemment. Le système ATG 101 détermine ainsi s'il existe une trajectoire volable entre chaque position courante précédente et chaque sommet de polygone identifié à l'étape 1204 ou 1206, ou si au moins un obstacle existe entre ces deux positions. L'étape 1206 est alors répétée avec ces deuxièmes trajectoires nouvellement évaluées, pour identifier si encore au moins un nouveau polygone a été rencontré.

Dans l'étape 1209, le système ATG 101 choisit une nouvelle position courante POS parmi les sommets des polygones identifiés depuis le début de la recherche de trajectoire latérale, afin de poursuivre la recherche de trajectoire latérale à partir de cette nouvelle position courante POS. Chaque sommet de polygone identifié est par exemple associé à une heuristique, ou à un coût d'inclusion du contournement dudit sommet dans la trajectoire latérale vers la destination, afin de permettre au système ATG 101 de savoir dans quel ordre choisir la nouvelle position courante POS parmi les sommets des polygones identifiés depuis le début de la recherche de trajectoire latérale. Puis l'étape 1202 est répétée, et le système ATG 101 réitère ainsi jusqu'à trouver une position courante POS pour laquelle au moins une dite première trajectoire existe sans rencontrer de polygone.

Dans l'étape 1210, il est mis fin à l'algorithme. Le système ATG 101 a trouvé une trajectoire latérale volable depuis la position A_POS jusqu'à la position T_POS en contournant les obstacles présents au vu du profil de trajectoire verticale préétabli. En procédant ainsi, c'est-à-dire en découvrant au fur et à mesure les polygones à effectivement considérer pour effectuer les contournements par sommets, le système ATG 101 limite la quantité de calculs à effectuer et donc le temps de calcul pour obtenir une trajectoire latérale volable.

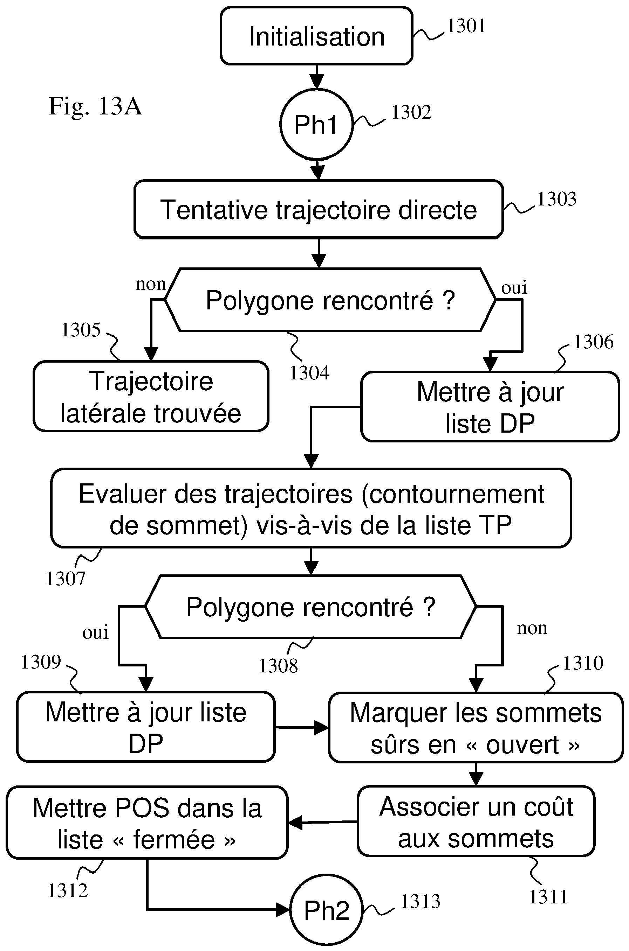

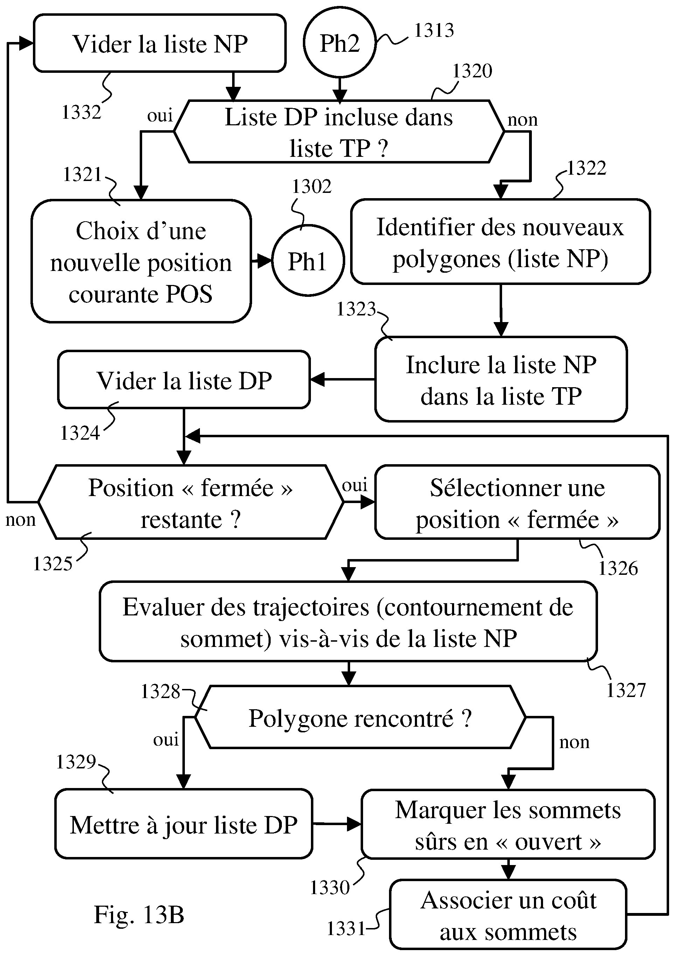

Les **Figs. 13A** et **13B** illustrent schématiquement et conjointement une implémentation d'algorithme de recherche de trajectoire latérale, dans un mode de réalisation particulier.

Dans une étape 1301, le système ATG 101 effectue une initialisation, dans laquelle le système ATG 101 établit la position courante POS à la position A_POS, c'est-à-dire au point de départ de la trajectoire latérale à trouver. En outre, le système ATG 101 initialise des listes DP, TP et NP à vide. La liste DP est destinée à mémoriser des polygones détectés pendant l'exécution de l'algorithme des Figs. 13A et 13B. La liste TP est destinée à mémoriser l'ensemble des polygones déjà ciblés dans l'exécution de l'algorithme des Figs. 13A et 13B, à savoir les polygones qui ont déjà été considérés à partir des positions courantes précédemment considérées de l'aéronef. La liste NP est destinée à mémoriser des polygones nouvellement détectés, à savoir chaque polygone qui serait présent dans la liste DP mais qui ne serait pas encore présent dans la liste TP.

Dans une étape 1302, le système ATG 101 initie une phase Ph1. La phase Ph1 vise à investiguer s'il existe une trajectoire directe entre la position courante POS et la destination, et à investiguer les contournements de sommets possibles à partir de la position courante POS, de sorte à évaluer les progressions possibles de la trajectoire latérale à partir de la position courante POS pour contourner un ou plusieurs obstacles éventuellement restants (dans la liste TP) pour atteindre la destination.

Dans une étape 1303, le système ATG 101 effectue une tentative de trajectoire en vol direct depuis la position courante POS jusqu'à la position T_POS de la destination (premières trajectoires dans l'algorithme de la Fig. 12).

Dans une étape 1304, le système ATG 101 vérifie s'il existe au moins un obstacle, c'est-à-dire au moins un polygone, rencontré sur la trajectoire tentée à l'étape 1303. Si tel est le cas, une étape 1306 est effectuée ; sinon, une étape 1305 est effectuée.

Dans l'étape 1305, le système ATG 101 a trouvé une trajectoire volable permettant à l'aéronef 100 de relier la destination depuis la position A_POS, et il est mis fin à l'algorithme des Figs. 13A et 13B.

Dans l'étape 1306, le système ATG 101 met à jour la liste DP en y listant les polygones détectés, c'est-à-dire les polygones rencontrés sur la trajectoire tentée à l'étape 1303 et donc identifiés comme à prendre en compte pour la génération de la trajectoire latérale par contournements de sommets.

Dans une étape 1307, le système ATG 101 recherche les sommets des polygones présents dans la liste TP et évalue s'il existe une trajectoire volable directe vers lesdits sommets (deuxièmes trajectoires dans l'algorithme de la Fig. 12) afin de poursuivre la trajectoire par contournement desdits sommets.

Dans une étape 1308, le système ATG 101 vérifie s'il existe au moins un obstacle, c'est-à-dire au moins un polygone, rencontré sur la trajectoire tentée à l'étape 1303. Si tel est le cas, une étape 1309 est effectuée ; sinon, une étape 1310 est effectuée.

Dans l'étape 1309, le système ATG 101 met à jour la liste DP en y listant les polygones détectés, c'est-à-dire les polygones rencontrés sur la trajectoire tentée à l'étape 1307 et donc identifiés comme à prendre en compte pour la génération de la trajectoire latérale par contournements de sommets. Et l'étape 1310 est effectuée.

Dans l'étape 1310, le système ATG 101 marque, dans un descriptif, chacun des sommets trouvés dans l'étape 1307 et pour lequel il existe une trajectoire volable directe (on parle de sommet « sûr »), comme « ouvert ». Cela signifie que le contournement du sommet de polygone en question est potentiellement à étudier pour faire progresser la trajectoire latérale en cours de calcul vers la destination.

Dans une étape 1311, le système ATG 101 associe préférentiellement, dans ledit descriptif, à chaque sommet trouvé dans l'étape 1307, une heuristique ou un coût d'inclusion du contournement dudit sommet dans la trajectoire latérale vers la destination. Par exemple, l'heuristique est choisie comme la longueur du chemin qui va depuis la position courante de l'aéronef 100 jusqu'au sommet en question plus une sous-estimation de la longueur de chemin qui manque pour arriver à destination. Comme sous-estimation, la distance en vol d'oiseau entre le sommet en question et la destination peut être utilisée.

Dans une étape 1312, le système ATG 101 marque, dans ledit descriptif, la position courante POS comme « fermée ». Le système ATG 101 indique ainsi que les pistes potentielles de poursuite de la trajectoire latérale par contournements de sommets à partir de la position courante POS ont été identifiées au vu des polygones déjà identifiés comme pertinents (dans la liste TP).

Dans une étape 1313, le système ATG 101 initie une phase Ph2. La phase Ph2 vise à investiguer les contournements de sommets possibles, pour les polygones nouvellement détectés et donc identifiés comme pertinents pour le calcul de la trajectoire latérale, à partir de chaque position courante précédemment évaluée, à savoir chacune des positions qui ont été marquées comme « fermées ».

Ainsi, dans une étape 1320, le système ATG 101 vérifie si tous les polygones listés dans la liste DP sont listés dans la liste TP. Si tel est le cas, tous les polygones détectés à partir de la position courante POS l'avaient déjà été auparavant, et une étape 1321 est effectuée ; sinon, une étape 1322 est effectuée.

Dans l'étape 1321, le système ATG 101 choisit une nouvelle position courante POS parmi les sommets des polygones identifiés depuis le début de la recherche de trajectoire latérale, afin de poursuivre la recherche de trajectoire latérale à partir de cette nouvelle position courante POS. Chaque sommet de polygone identifié est par exemple associé à une heuristique, ou à un coût d'inclusion du contournement dudit sommet dans la trajectoire latérale vers la destination, afin de permettre au système ATG 101 de savoir dans quel ordre choisir la nouvelle position courante POS parmi les sommets des polygones identifiés depuis le début de la recherche de trajectoire latérale. Ensuite, la phase Ph1 est répétée à partir de la nouvelle position courante POS choisie.

Dans l'étape 1322, le système ATG 101 identifie les nouveaux polygones, c'est-à-dire les polygones qui sont listés dans la liste DP mais qui ne sont pas listés dans la liste TP. Le système ATG 101 forme ainsi la liste NP avec ces nouveaux polygones.

Dans une étape 1323, le système ATG 101 inclut la liste NP dans la liste TP. Ainsi, la liste des polygones identifiés comme pertinents pour la génération de la trajectoire latérale est mise à jour avec les polygones nouvellement rencontrés.

Dans une étape 1324, le système ATG 101 vide la liste DP, étant donné que tous les polygones qui y sont listés ont été intégrés dans la liste TP, lors de cette itération (liste NP) ou d'une itération précédente.

Dans une étape 1325, le système ATG 101 vérifie s'il existe une position, marquée comme « fermée », restant à traiter vis-à-vis des nouveaux polygones répertoriés dans la liste NP.

Si tel est le cas, une étape 1326 est effectuée ; sinon, une étape 1332 est effectuée, dans laquelle la liste NP est vidée, avant de répéter l'étape 1320 (au moins un nouveau polygone peut avoir été identifié comme pertinent dans une étape 1328 décrite ci-après).

Dans l'étape 1326, le système ATG 101 sélectionne (par exemple, arbitrairement) une dite position marquée comme « fermée » (c'est-à-dire une position courante POS précédente, ou en d'autres termes une position sélectionnée dans une itération précédente comme position courante POS), restant à traiter vis-à-vis des nouveaux polygones répertoriés dans la liste NP.

Dans une étape 1327, le système ATG 101 évalue des trajectoires directes entre la position sélectionnée à l'étape 1326 et chacun des sommets de polygones de la liste NP, afin de déterminer si un ou plusieurs autres nouveaux polygones seraient rencontrés par ces trajectoires (deuxièmes trajectoires dans l'algorithme de la Fig. 12). Ainsi, le système ATG 101 prend en compte les nouveaux polygones identifiés dans la liste NP, pour évaluer leur contournement potentiel, de manière rétroactive par rapport à la position qui a été sélectionnée à l'étape 1326 et qui a déjà été étudiée précédemment. Le système ATG 101 détermine ainsi s'il existe une trajectoire volable entre la position qui a été sélectionnée à l'étape 1326 et chaque sommet de polygone identifié dans la liste NP, ou si au moins un nouvel obstacle (non encore identifié dans la liste TP) existe entre ces deux positions.

Dans une étape 1328, le système ATG 101 vérifie s'il existe au moins un obstacle, c'est-à-dire au moins un polygone, nouvellement rencontré sur l'une des trajectoires évaluées à l'étape 1327. En d'autres termes, le système ATG 101 vérifie s'il existe au moins un polygone rencontré sur l'une des trajectoires évaluées à l'étape 1327. Si tel est le cas, une étape 1329 est effectuée ; sinon, une étape 1330 est effectuée.

Dans l'étape 1329, le système ATG 101 met à jour la liste DP en y incluant une information représentative de chaque polygone qui aurait été nouvellement rencontré sur l'une des trajectoires évaluées à l'étape 1327. L'étape 1330 est ensuite effectuée.

Dans l'étape 1330, le système ATG 101 marque, dans le descriptif, chacun des sommets des polygones nouvellement rencontrés sur l'une des trajectoires évaluées à l'étape 1327 et pour lequel il existe une trajectoire volable directe (comme dit précédemment, on parle de sommet « sûr »), comme « ouvert ». Cela signifie que le contournement du sommet de polygone en question est potentiellement à étudier pour faire progresser la trajectoire latérale en cours de calcul vers la destination.

Dans une étape 1331, le système ATG 101 associe préférentiellement, dans ledit descriptif, à chaque sommet des polygones nouvellement rencontrés sur l'une des trajectoires évaluées à l'étape 1327, une heuristique ou un coût d'inclusion du contournement dudit sommet dans la trajectoire latérale vers la destination, comme déjà décrit. Ensuite, l'étape 1325 est répétée pour traiter une autre position « fermée », s'il en reste à traiter vis-à-vis des nouveaux polygones répertoriés dans la liste NP.

Dans un mode particulier de réalisation de filtrage, le système ATG 101 effectue une recherche de trajectoire latérale par contournement de sommets uniquement en considérant les sommets de polygones pertinents au regard du profil de trajectoire verticale. Ainsi, dans le cas où la recherche de trajectoire doit être effectuée à altitude constante, seule la plus basse couche parmi celles qui ne sont pas inférieures à l'altitude de l'aéronef 100 moins la marge verticale VM est prise en compte. En cas de montée ou de descente, le même raisonnement est appliqué pour ne garder que les couches qui sont pertinentes au regard de l'intervalle d'altitude considéré dans le profil de trajectoire verticale.

Dans un mode de réalisation, le système ATG 101 génère une alerte lorsqu'aucune trajectoire latérale n'a pu être trouvée pour rejoindre la destination dans les conditions données. Une autre destination doit alors être sélectionnée et/ou une autre direction à suivre à destination et/ou un autre profil de trajectoire verticale. Considérant par exemple qu'un système de calcul de trajectoire de l'avionique a accès à une base de données comprenant une liste ordonnée de destinations (par exemple : aéroports) possibles, pour par exemple dérouter l'aéronef 100 en urgence suite à une dépressurisation cabine, le système de calcul de trajectoire soumet au système ATG 101 les destinations selon la liste ordonnée. Si le système ATG 101 est capable de trouver une trajectoire volable jusqu'à la destination soumise par le système de calcul de trajectoire, alors ladite trajectoire est programmée dans le système de calcul de trajectoire et est suivie pour faire transiter l'aéronef 100 jusqu'à cette destination. Sinon, le système de calcul de trajectoire soumet au système ATG 101 la prochaine destination dans la liste ordonnée.

## Revendications

1. Procédé de génération de trajectoire pour amener un aéronef (100) en vol depuis une position initiale (A_POS) de l'aéronef (100) à une destination ayant une position géoréférencée (T_POS), le procédé étant implémenté par un système de génération automatique de trajectoire (101) sous forme de circuiterie électronique embarquée dans l'aéronef (100), le procédé comportant les étapes suivantes :
- obtenir (904) des polygones représentatifs d'obstacles potentiellement rencontrés par l'aéronef (100) depuis la position initiale (A_POS) de l'aéronef (100) jusqu'à la destination, chaque polygone étant associé avec une couche d'altitude dans laquelle l'obstacle est inclus dans ledit polygone ;
- rechercher (906) une trajectoire latérale volable entre la position initiale (A_POS) de l'aéronef (100) et la destination en contournant les polygones par les sommets, en respectant un profil de trajectoire verticale préétabli ;
la trajectoire latérale étant recherchée de la façon suivante :
- évaluer (1202) des premières trajectoires, qui sont des trajectoires directes entre une position courante de l'aéronef (100) et la destination en tenant compte d'une direction de vol de l'aéronef (100) à la position courante et d'une direction (T_TRK) à suivre à destination, la position courante de l'aéronef (100) étant initialement la position initiale (A_POS) de l'aéronef (100), et identifier (1204) tout polygone rencontré dans les premières trajectoires ;
- évaluer (1205) une deuxième trajectoire, qui est une trajectoire de contournement de sommet, entre ladite position courante de l'aéronef (100) et chaque sommet de polygone identifié ;
- identifier (1206) tout nouveau polygone rencontré dans les deuxièmes trajectoires ;
- choisir (1209) une nouvelle position courante de l'aéronef (100) parmi les sommets de polygones identifiés pour chacun desquels une trajectoire volable directe jusqu'au sommet en question existe, et réitérer jusqu'à trouver une position courante de l'aéronef (100) pour laquelle au moins une dite première trajectoire existe sans rencontrer de polygone ;
la trajectoire latérale étant en outre recherchée de telle sorte que, lorsqu'un nouveau polygone est identifié (1207), une dite deuxième trajectoire est évaluée (1208) pour chaque sommet de chaque nouveau polygone identifié, et ce, vis-à-vis de chaque position courante précédente, avec éventuelle identification (1206) de nouveau polygone rencontré.

2. Procédé selon la revendication 1, dans lequel la trajectoire latérale est recherchée, par itérations sur des positions courantes successives de l'aéronef, de :
- une première phase (P1) investiguant la trajectoire directe entre la position courante de l'aéronef (100) qui a été sélectionnée pour l'itération en question et la destination, et investiguant les contournements de sommets possibles à partir de la position courante de l'aéronef (100) qui a été sélectionnée pour l'itération en question ;
- une deuxième phase (P2) investiguant des contournements de sommets possibles, pour les polygones identifiés pendant l'itération en question, à partir de chaque dite position courante précédente.

3. Procédé selon la revendication 2, dans lequel, lorsqu'un polygone est nouvellement rencontré, chacun de ses sommets pour lequel une trajectoire volable directe jusqu'à ce sommet existe est marqué (1310, 1330) comme position ouverte, et dans lequel lors de la première phase (P1), la position courante qui a été sélectionnée pour l'itération en question est marquée comme position fermée (1312), et dans la seconde phase, les positions marquées comme fermées sont les positions courantes précédentes.

4. Procédé selon la revendication 3, dans lequel la nouvelle position courante est choisie parmi les positions marquées comme ouvertes.

5. Procédé selon l'une quelconque des revendications 1 à 4, dans lequel chaque sommet de polygone identifié pour lequel une trajectoire volable directe jusqu'à ce sommet existe est associé (1331) à une heuristique, ou à un coût d'inclusion du contournement dudit sommet dans la trajectoire latérale vers la destination, afin de choisir la nouvelle position courante parmi les sommets de polygones identifiés.

6. Procédé selon l'une quelconque des revendications 1 à 5, comportant en outre les étapes successives suivantes, avant de rechercher la trajectoire latérale :
- dilater (402) les polygones d'une marge latérale (LM) prédéterminée dans toutes les directions, la marge latérale (LM) prédéterminée permettant d'assurer une sûreté de navigation de l'aéronef (100) aux instruments ;
- fusionner (403) les polygones qui se touchent ou se chevauchent par couche d'altitude ;
- rétracter (404) les polygones de la marge latérale prédéterminée dans toutes les directions.

7. Procédé selon l'une quelconque des revendications 1 à 6, comportant l'étape suivante, avant de rechercher la trajectoire latérale :
- garder uniquement les polygones des couches qui sont pertinentes au regard d'une altitude constante ou d'un intervalle d'altitude défini par le profil de trajectoire verticale.

8. Produit programme d'ordinateur comportant des instructions causant l'implémentation du procédé selon l'une quelconque des revendications 1 à 7, lorsque les instructions sont exécutées par un processeur.

9. Système de génération automatique de trajectoire (101) pour amener un aéronef (100) en vol depuis une position initiale (A_POS) de l'aéronef (100) à une destination ayant une position géoréférencée (T_POS), le système de génération automatique de trajectoire (101) comportant de la circuiterie électronique qui est destinée à être embarquée dans l'aéronef (100) et qui est configurée pour implémenter les étapes suivantes :
- obtenir (904) des polygones représentatifs d'obstacles potentiellement rencontrés par l'aéronef (100) depuis la position initiale (A_POS) de l'aéronef (100) jusqu'à la destination, chaque polygone étant associé avec une couche d'altitude dans laquelle l'obstacle est inclus dans ledit polygone ;
- rechercher (906) une trajectoire latérale volable entre la position courante (A_POS) de l'aéronef (100) et la destination en contournant les polygones par les sommets, en respectant un profil de trajectoire verticale préétabli ;
la trajectoire latérale étant recherchée de la façon suivante :
- évaluer (1202) des premières trajectoires, qui sont des trajectoires directes entre une position courante de l'aéronef (100) et la destination en tenant compte d'une direction de vol de l'aéronef (100) à la position courante et d'une direction (T_TRK) à suivre à destination, la position courante de l'aéronef (100) étant initialement la position initiale (A_POS) de l'aéronef (100), et identifier (1204) tout polygone rencontré dans les premières trajectoires ;
- évaluer (1205) une deuxième trajectoire, qui est une trajectoire de contournement de sommet, entre ladite position courante de l'aéronef (100) et chaque sommet de polygone identifié ;
- identifier (1206) tout nouveau polygone rencontré dans les deuxièmes trajectoires ;
- choisir (1209) une nouvelle position courante de l'aéronef (100) parmi les sommets de polygones identifiés pour chacun desquels une trajectoire volable directe jusqu'au sommet en question existe, et réitérer jusqu'à trouver une position courante de l'aéronef (100) pour laquelle au moins une dite première trajectoire existe sans rencontrer de polygone ;
la trajectoire latérale étant en outre recherchée (1207) de telle sorte que, lorsqu'un nouveau polygone est identifié (1208), une dite deuxième trajectoire est évaluée pour chaque sommet de chaque nouveau polygone identifié, et ce, vis-à-vis de chaque position courante précédente, avec éventuelle identification (1206) de nouveau polygone rencontré.

10. Aéronef (100) comportant le système de génération automatique de trajectoire (101) selon la revendication 9.
